# EUROPEAN PATENT SPECIFICATION

(11) **EP 1 424 811 B1**
(45) Date of publication and mention of the grant of the patent: **01.02.2012**
(21) Application number: 03022156.8
(22) Date of filing: 30.09.2003
(51) Int. Cl.: H04L 12/28

(54) **Wireless LAN system**
Drahtloses lokales Netzwerk
Système de réseau local sans fil

(30) Priority: 26.11.2002 JP 2002342061
(43) Date of publication of application: 02.06.2004
(73) Proprietor: NEC Infrontia Corporation, Kawasaki-shi, Kanagawa (JP)
(72) Inventor: Hosoda, Hironori, Kawasaki-shi Kanagawa (JP); Kobayashi, Yoshikazu, Kawasaki-shi Kanagawa (JP)
(74) Representative: Betten & Resch

(56) References cited:
- EP-A- 1 209 863
- WO-A-01/30025
- GB-A- 2 373 887
- US-A- 5 089 814

## Description

### BACKGROUND OF THE INVENTION

The present invention relates to wireless LAN (local area network) systems and, more particularly, to a wireless LAN system having an automatic time adjusting function of adopting such presetting contents as frequency channels and transmission power levels of wireless LAN stations to the specification prescribed by standard organizations in various countries.

With a recent trend of globalization of traffic and business, communication means for data communication not only locally but also globally are required. For this requirement, wired communication means such as internet systems have been proposed and broadly utilized by connecting PCs (personal computers) thereto. However, the utilization of such wired communication means is restricted to particular places, in which connection parts are prepared. Besides, such wired communication means requires considerable equipment and maintenance expenditures. On the other hand, the use of wired systems enables enlargement of the service area and reduction of equipment cost and maintenance expenditures. For this reason, wired LAN systems have been proposed.

Wired communication, however, is under superintendent management by offices which are different in different countries or regions, and is not standardized world-wide. Therefore, for interconnecting PCs or the like and wireless LAN for data communication or the like, it is necessary to have resort to a system or a mode (i.e., country mode) conforming to the wireless communication system in each country or region. Besides, with development of traffic system and globalization of business or the like, users using PCs frequently move from one country or region to other countries or regions.

For using a PC or the like in interconnection with wireless LAN, it has been necessary for the user to use what have been preset for particular country modes in individual countries or geographic locations. For using the PC or the like in other countries or regions, it has been necessary to prepare PCs fitted to these countries or regions or changing special software and substituting a module formed from part of the software, thus leading to inconvenience in use.

As relevant prior art, electronic devices typically personal computers (PC) or video recorders (VTR) usually perform various controls based on time data obtained by an internal clock function. Accordingly, automatic correcting systems have been proposed, in which correction of time differences in individual regions and updating of specified environments are performed automatically by receiving radio waves transmitted from an artificial satellite in a GPS (global positioning system) and obtaining coordinates of the measurement point (see patent literature, for instance, Japanese Patent laid open No.Hei 9-297191). Also, one or more radio and other broadcast stations may be present in each region. The frequency channels of these broadcast stations are usually different from one another. This means that it is inconvenient for the user to change the receiver presetting whenever he or she moves from one region to another by a car, in which a frequency preset type receiver is mounted. Accordingly, an automatic frequency presetting type wireless receiver has been proposed, which includes a region code detecting means for automatic presetting the receiving frequency of a frequency presetting type receiver in correspondence to the region where the user is found (see patent literature 2, for instance, Japanese Patent laid open No. Hei 6-125246).

In GB-A-2 373 887, a mobile computing device having a plurality of operational states each with a set of device operation choices for power management appropriate to that operational state is disclosed. The device is able to determine a present operational state not defined solely by the nature or state of the active power source, and to implement the device operation choices for the present operational state.

In WO-A-01/30025, a method and apparatus to limit frequency bands used by a low power radio frequency device are disclosed.

In US patent 5,089,814, an automatic time zone adjustment of a portable receiver is disclosed.

As shown above, the prior art wireless LAN systems pose various problems regarding the operability for their use in a plurality of different countries or regions. Also, it is impossible from technical and cost grounds to directly apply techniques proposed with the above other electronic devices or the like.

### SUMMARY OF THE INVENTION

The present invention was made in view of the above problems inherent in the prior art, and its object is to provide a wireless LAN system capable of overcoming or alleviating these problems and suitable for use for data communication or the like with PCs or the like.

According to an aspect of the present invention, there is provided a wireless LAN system as defined in claim 1.

A station check is made on whether the preset country is employing an FH system or a DS-SS system, and the country mode is determined for each system. When a plurality of countries are present in each time zone, candidate countries are displayed on the display of the portable communication device for the user's selection of one of these candidate countries.

According to another aspect of the present invention, there is provided a wireless LAN system permitting wireless communication of the user with portable communication device via a wireless LAN (local area network) having country mode which is different with different countries, wherein: the portable communication device includes a time zone data table with time zone data stored therein and an individual country presetting data table with individual country presetting data stored therein, and the wireless LAN system further comprises a wireless LAN driver for setting the country mode and a wireless LAN hardware module for realizing the presetting contents of the wireless LAN driver.

The wireless LAN driver includes a member country deciding part for deciding a member country based on time zone data of the time zone data table part, a presetting part for reading out and presetting the pertinent country mode of the individual country presetting data table part based on the decision result of the member country deciding part, and a device driver part for receiving an adaptive command of presetting contents transmitted from the presetting part. The time zone data are stored together with world map in the time zone data table part, and are displayed on a display of the PC or the like in response to a user's request. The portable communication device is a personal computer.

Other objects and features will be clarified from the following description with reference to attached drawings.

### BRIEF DESCRIPTION OF THE DRAWINGS

Fig. 1 is a table showing standardized organizations concerning electric communication in main countries or regions in the world;
Fig. 2 is a block diagram showing a system arrangement of a main part of a preferred embodiment of a wireless LAN system according to the present invention
Fig. 3 shows frequency hopping sets for various geographies;
Fig. 4 shows adaptable frequency channel in various countries;
Fig. 5 shows maximum output power levels in various geographic locations;
Figs. 6 and 7 show flow charts representing an operation of the wireless LAN system according to the present invention;
Fig. 8 is a drawing for explaining time zone included in OS; and
Fig. 9 is a drawing for explaining candidate preset counties in each time zone.

### PREFERRED EMBODIMENTS OF THE INVENTION

Preferred embodiments of the present invention will now be described with reference to the drawings.

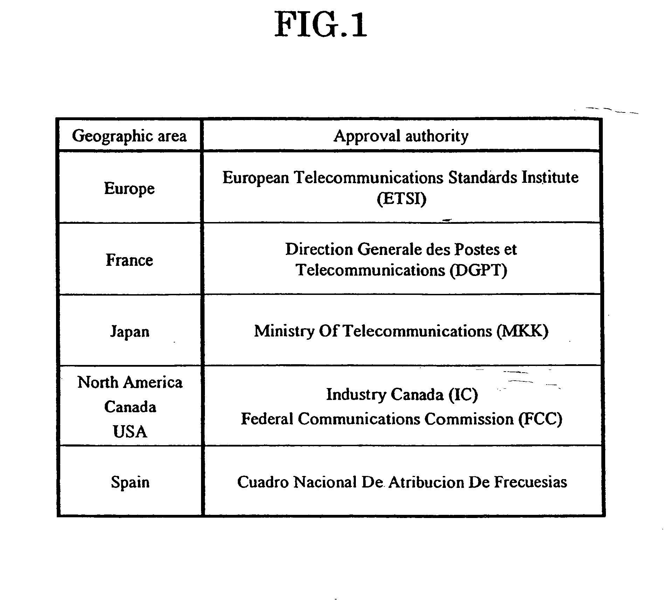

Fig. 1 is a table showing standardized organizations concerning electric communication in main countries or regions in the world. In the Figure, regions are shown in the left column, and the names of standardized organizations are shown in the right column. For example, European Telecommunication Standard Institute (ETSI) in Europe and Ministry of Telecommunications (MKK) in Japan make decision and management.

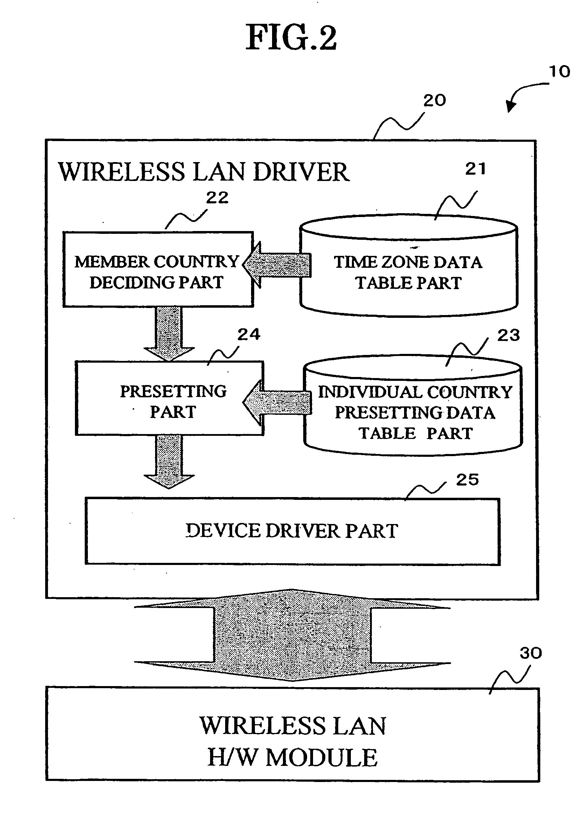

Fig. 2 is a block diagram showing a system arrangement of a main part of a preferred embodiment of a wireless LAN system according to the present invention. The wireless LAN system (or wireless LAN station) 10 includes a wireless LAN driver 20 realized in software or OS and a wireless LAN hardware (H/W) module 30. The wireless LAN driver 20 is constituted by a time zone data table part 21, a member country deciding part 22, an individual country presetting data table part 23, a presetting part 24 and a device driver 25.

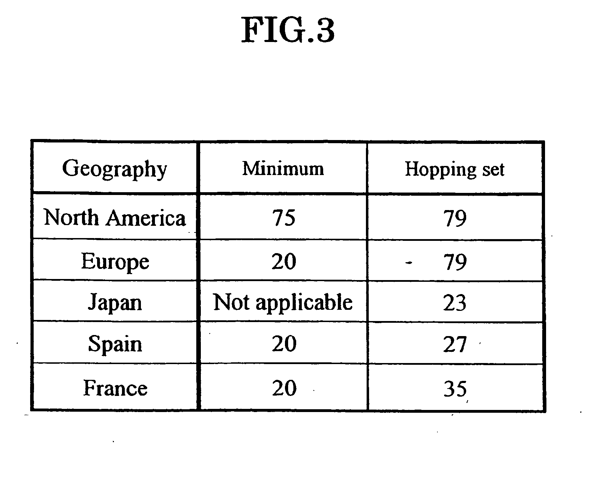

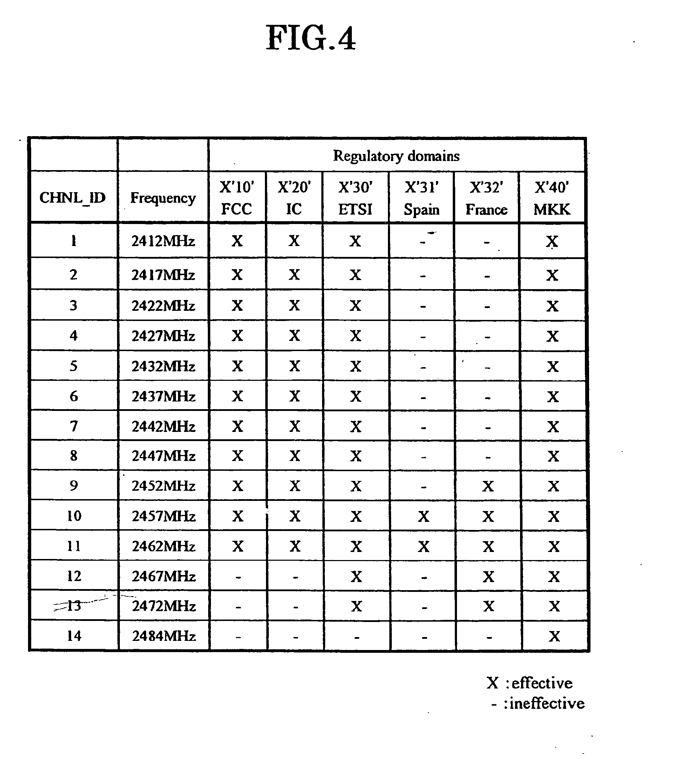

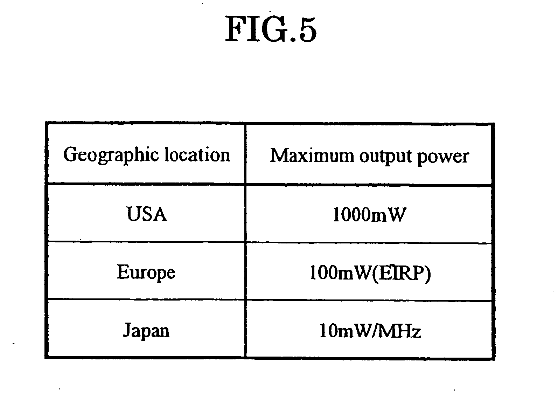

As shown in Figs. 3 to 5, in the individual country presetting data table part 23, frequency hopping sets (FH systems) approved by standardized authorities, adaptable frequency channels (DS-SS systems) and transmission power level data are shown. Fig. 3 shows minimums and hopping sets for various geographies. For example, the hopping set noted above is 79. Fig. 4 shows channels ID, frequencies and effectiveness (X) or ineffectiveness of regulatory domains in the standardized authorities in various countries shown in Fig. 1. Here, FCC stands for U.S.A., IC stands for Canada, ETSI stands for Europe, Spain stands for Spain, France stands for France, and MKK stands for Japan. Fig. 5 shows maximum output power levels in various geographic locations. For example, the maximum output power level is 1000 mW (i.e., 1 W) in U.S.A., and 100 mW in Europe.

When a member country is decided by the member country deciding part 22, the presetting part 24 reads out the data stored in the above individual country presetting data table part 23, and transmits an adaptive command of the presetting component to the device driver part 25 for presetting therein. The wireless LAN module 30 is of easy design such that it can actually realize the preset content.

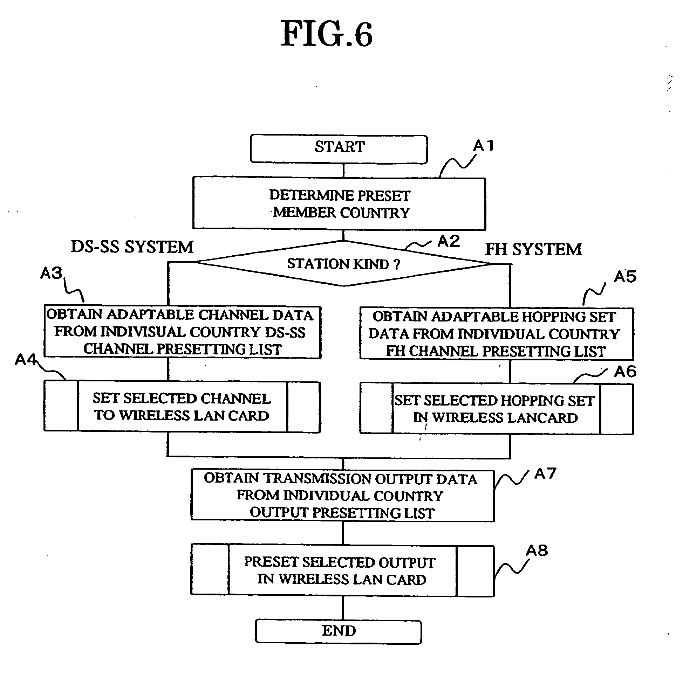

Now, an automatic presetting operation in the wireless LAN system according to the present invention will be described with reference to the flow chart shown in Fig. 6. When a country mode adjustment is requested by a user's operation, a country to be preset by the member country deciding part 22 in the wireless LAN driver 20 is first determined (step A1). Then, a station kind check, i.e., a check as to whether the station is of DS-SS system (adaptable frequency channel) or of an FH system (frequency hopping set), is made (step A2).

In the case of the DS-SS system, the presetting part 24 obtains an adaptable channel data from an individual DS-SS channel presetting list in the individual presetting data table part 23 (step A3). The presetting part 24 transmits the content to the device driver part 25 to set the selected channel to the wireless LAN card (step A4). In the case of the FH system, the presetting part 24 obtains adaptable hopping set data from the individual country channel presetting list in the individual presetting data table part 23 (step A5). Then, the presetting part 24 presets the selected hopping set in the wireless LAN card (step A6).

After the above step A4 or A6, transmission output data is obtained from an individual country output presetting list in the individual country presetting data table part 23 (step A7). Then, the selected output is preset in the wireless LAN card (step A8), thus bringing an end to the station presetting updating operation. As the user side operation, only a "COUNTRY MODE UPDATING BUTTON" (not shown) is caused to be selected from a station utility display, and no particular input parameter is necessary.

As shown above, the property of the station is automatically updated to a presetting conforming to wireless specifications of each country, and the user thus can use wireless LAN as in the conventional way even in an oversea (or other destination) country without need of any wireless specification knowledge.

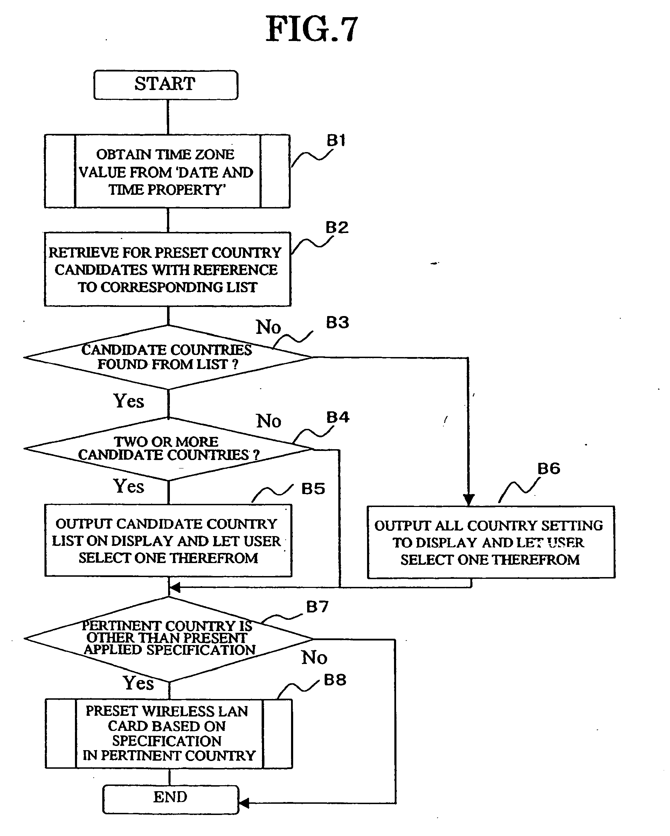

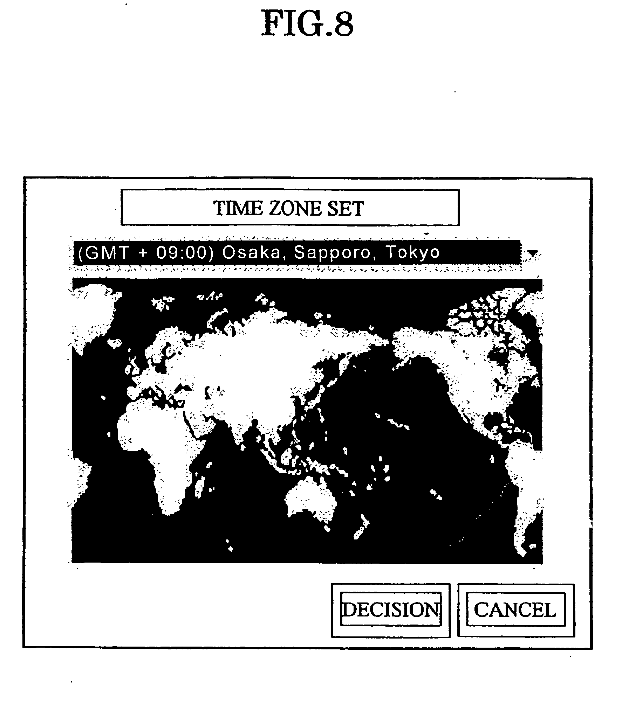

Now, an example of operation for specifying a preset country in the wireless LAN system 10 according to the present invention will be described with reference to a flow chart shown in Fig. 7. First, a station utility, to which a country mode adjustment is requested from the user, sends a time zone data possessed by an OS (operating system) as shown in Fig. 8 together with a country mode adjustment execution command to the member country deciding part 22 in the wireless LAN driver 20 and the time zone value is obtained. (step B1).

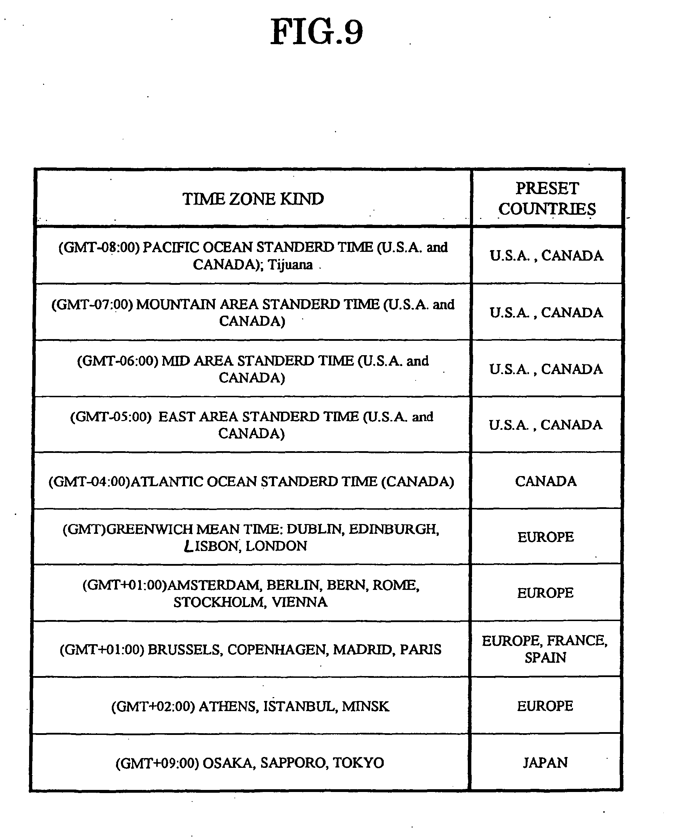

Receiving these data, the member country deciding part 22 first retrieves for preset country candidates by using a "TIME ZONE DATA TABLE", in which preset country candidates corresponding to the time zones as shown in Fig. 9 are stored (step B2). When a plurality of preset country candidates are retrieved, the user selects one of these candidates. When no pertinent country is detected, all the preset candidate countries are outputted on the display, and the user selects one of these countries.

Specifically, a check is made as to whether candidate countries could have been found from the list (step B3). When candidate countries could have been found ("Yes" in step B3), a check is made as to whether two or more candidate countries could have been found (step B4). When two or more candidate countries could be found ("Yes" in step B4), the candidate country list is outputted to the display to let the user select one of these candidate countries (step B5). When no candidate country could have been found from the list ("No" in step B3), all the country settings are outputted to the display to let the user select one of these presettings (step B6). After the above steps B5 and B6 and also when it is found in the above step B4 that the number of candidate countries is not two or more ("No" in step B4), a check is made as to whether the pertinent country is other than a country pertinent to the presently applied specification (step B7). When the country is an other country ("Yes" in step B7), presetting of wireless LAN card is made based on the specification in the pertinent country (step B8), and an end is brought to the operation. When the country is the same as of the country pertinent to the presently applied specification ("No", in step B7), an end is brought to the operation without execution of any presetting updating.

As has been shown, with the wireless LAN system according to the present invention the country mode adjustment can be made by merely updating the OS time zone. Thus, the user can cope with even such a case when bringing a carried PC to foreign countries by a dispatch without need of executing any particular operation.

With the wireless LAN system according to the present invention the following practically pronounced advantages are obtainable. That is, for using a carried PC or the like, the user can make it possible, without any particular operation, to determine the user's location on the basis of time zone data possessed by an OS mounted in the PC or the like and cause automatic presetting of the wireless field specifications (i.e., country mode) pertinent to the determined country. The user thus can use the PC or the like by easily and quickly connecting the PC or the like on the basis of the specifications on the site for using the PC or the like in any place in the world.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. A wireless LAN system (10) arranged to permit wireless communication of a user with a portable communication device, wherein the system comprises means for determining the user's location based on time zone data possessed by an operating system OS (20) mounted on the portable communication device, and means for determining a country mode conforming to the wireless communication system of a preset country corresponding to the user's location,
wherein when a plurality of countries are present in each time zone, the system further comprises means for displaying candidate countries on a display of the portable communication device for the user's selection of one of these candidate countries.

2. The wireless LAN system according to claim 1, wherein a station check is made on whether the preset country is employing an FH system or a DS-SS system, and the system is arranged to determine the country mode for each system.

3. The wireless LAN system according to claim 1, being further arranged to permit wireless communication of the user with portable communication device via a wireless LAN (local area network) having a country mode which is different with different countries, wherein:
the portable communication device includes a time zone data table (21) with time zone data stored therein and an individual country presetting data table (23) with individual country presetting data stored therein, and the wireless LAN system further comprises a wireless LAN driver (25) for setting the country mode and a wireless LAN hardware module (30) for realizing the presetting contents of the wireless LAN driver.

4. The wireless LAN system according to claim 3, wherein the wireless LAN driver includes a member country deciding part (22) for deciding a member county based on time zone data of the time zone data table part, a presetting part (24) for reading out and presetting the pertinent country mode of the individual country presetting data table part based on the decision result of the member country deciding part, and a device driver part for receiving an adaptive command of presetting contents transmitted from the presetting part.

5. The wireless LAN system according to claim 1 or 3, wherein the time zone data are stored together with a world map in the time zone data table part, and are displayed on a display of a personal computer PC or the like in response to a user's request.

6. The wireless LAN system according to claim 1 or 5, wherein the portable communication device is a personal computer PC.

## Patentansprüche

1. Drahtloses LAN-System (10), das dazu ausgelegt ist, drahtlose Kommunikation eines Benutzers mit einer tragbaren Kommunikationsvorrichtung zu ermöglichen, wobei das System eine auf der tragbaren Kommunikationsvorrichtung angebrachte Einrichtung zum Ermitteln der Position des Benutzers basierend auf Zeitzonendaten, über die ein Betriebssystem OS (20) verfügt, sowie eine Einrichtung zum Ermitteln eines mit dem drahtlosen Kommunikationssystem konformen Ländermodus eines voreingestellten Landes umfaßt, das der Position des Benutzers entspricht,
wobei, wenn eine Mehrzahl von Ländern in jeder Zeitzone voreingestellt sind, das System ferner eine Einrichtung zum Anzeigen von Kandidatenländern auf einer Anzeige der tragbaren Kommunikationsvorrichtung zur Benutzerauswahl eines dieser Kandidatenländer umfaßt.

2. Drahtloses LAN-System nach Anspruch 1, wobei eine Stationsüberprüfung dahingehend durchgeführt wird, ob das voreingestellte Land ein FH-System oder ein DS-SS-System verwendet, und das System dazu ausgelegt ist, den Ländermodus für jedes System zu ermitteln.

3. Drahtloses LAN-System nach Anspruch 1, das ferner dazu ausgelegt ist, drahtlose Kommunikation des Benutzers mit einer tragbaren Kommunikationsvorrichtung über ein drahtloses LAN (lokales Netzwerk) zu ermöglichen, das einen Ländermodus aufweist, der bei unterschiedlichen Ländern verschieden ist, wobei:
die tragbare Kommunikationsvorrichtung eine Zeitzonen-Datentabelle (21) mit it darin gespeicherten Zeitzonendaten sowie eine Voreinstellungsdatentabelle (23) für individuelle Länder mit darin gespeicherten Voreinstellungsdaten für individuelle Länder aufweist und das drahtlose LAN-System ferner einen drahtlosen LAN-Treiber (25) zum Einstellen des Ländermodus sowie ein drahtloses LAN-Hardwaremodul (30) zur Realisierung der Voreinstellungsinhalte des drahtlosen LAN-Treibers aufweist.

4. Drahtloses LAN-System nach Anspruch 3, wobei der drahtlose LAN-Treiber ein Mitgliedsland-Entscheidungsteil (22), um sich basierend auf Zeitzonendaten des Zeitzonendatentabellenteils für ein Mitgliedsland zu entscheiden, ein Voreinstellungsteil (24) zum Auslesen und Voreinstellen des entsprechenden Ländermodus des Voreinstellungsatentabellenteils für individuelle Länder basierend auf dem Entscheidungsergebnis des Mitgliedsland-Entscheidungsteils sowie ein Vorrichtungstreiberteil aufweist, um einen adaptiven Befehl von Voreinstellungsinhalten zu empfangen, die vom Voreinstellungsteil übertragen wurden.

5. Drahtloses LAN-System nach Anspruch 1 oder 3, wobei die Zeitzonendaten zusammen mit einer Weltkarte im Zeitzonendatentabellenteil gespeichert und in Reaktion auf eine Benutzeranfrage auf einer Anzeige eines Personalcomputers PC oder dergleichen angezeigt werden.

6. Drahtloses LAN-System nach Anspruch 1 oder 5, wobei die tragbare Kommunikationsvorrichtung ein Personalcomputer PC ist.

## Revendications

1. Système de réseau local sans fil (10) agencé pour permettre une communication sans fil d'un utilisateur avec un dispositif de communication portable, dans lequel le système comprend un moyen pour déterminer l'emplacement de l'utilisateur sur la base de données de fuseaux horaires en possession d'un système d'exploitation, OS, (20) installé sur le dispositif de communication portable, et un moyen pour déterminer un mode de pays conformément au système de communication sans fil d'un pays préréglé correspondant à l'emplacement de l'utilisateur,
dans lequel lorsque plusieurs pays sont présents dans chaque fuseau horaire, le système comprend en outre un moyen pour afficher des pays candidats sur un affichage du dispositif de communication portable pour que l'utilisateur sélectionne l'un de ces pays candidats.

2. Système de réseau local sans fil selon la revendication 1, dans lequel un contrôle de station est effectué pour déterminer si le pays préréglé emploie un système FH ou un système DS-SS, et le système est agencé pour déterminer le mode de pays pour chaque système.

3. Système de réseau local sans fil selon la revendication 1, agencé en outre pour permettre une communication sans fil de l'utilisateur avec un dispositif de communication portable par le biais d'un réseau local, LAN, sans fil ayant un mode de pays qui est différent avec différents pays, dans lequel :
le dispositif de communication portable comprend une table de données de fuseaux horaires (21) dans laquelle sont stockées des données de fuseaux horaires et une table de données de préréglage de pays individuel (23) dans laquelle sont stockées des données de préréglage de pays individuel, et le système de réseau local sans fil comprend en outre un pilote de réseau local sans fil (25) pour régler le mode de pays et un module matériel de réseau local sans fil (30) pour réaliser le contenu de préréglage du pilote de réseau local sans fil.

4. Système de réseau local sans fil selon la revendication 3, dans lequel le pilote de réseau local sans fil comprend une partie de décision de pays membre (22) pour décider si un pays est un pays membre sur la base des données de fuseaux horaires de la partie de table de données de fuseaux horaires, une partie de préréglage (24) pour lire et prérégler le mode de pays pertinent de la partie de table de données de préréglage de pays individuel sur la base du résultat de décision de la partie de décision de pays membre, et une partie de pilote de dispositif pour recevoir une commande adaptative de contenu de préréglage transmise depuis la partie de préréglage.

5. Système de réseau local sans fil selon la revendication 1 ou 3, dans lequel les données de fuseaux horaires sont stockées avec une carte du monde dans la partie de table de données de fuseaux horaires, et sont affichées sur un affichage d'un ordinateur personnel, PC, ou d'un dispositif similaire en réponse à une demande d'un utilisateur.

6. Système de réseau local sans fil selon la revendication 1 ou 5, dans lequel le dispositif de communication portable est un ordinateur personnel, PC.
